## Europäisches Patentamt

## European Patent Office

## Office européen des brevets

(11) Publication number: **0 236 757**
**B1**

(12) EUROPEAN PATENT SPECIFICATION

(45) Date of publication of patent specification: **25.04.90**

(51) Int. Cl.⁵: **B 60 S 1/36**

(21) Application number: **87101671.3**

(22) Date of filing: **06.02.87**

(54) **Vehicle windshield wiper.**

(30) Priority: **21.02.86 IT 6713786**

(43) Date of publication of application:
**16.09.87 Bulletin 87/38**

(45) Publication of the grant of the patent:
**25.04.90 Bulletin 90/17**

(84) Designated Contracting States:
**AT BE CH DE ES FR GB GR LI LU NL SE**

(56) References cited:
**BE-A- 891 806**
**DE-A-3 127 018**
**DE-C-1 066 890**
**FR-A-2 560 570**
**US-A-3 077 628**
**US-A-4 418 440**

(73) Proprietor: **R.G.B. S.p.A.**
**Corso Lecce, 96**
**I-10143 Torino (IT)**

(72) Inventor: **Brusasco, Enzo**
**Corso Re Umberto, 64**
**I-10129 Torino (IT)**

(74) Representative: **Prato, Roberto et al**
**STUDIO TORTA Società Semplice Via Viotti 9**
**I-10121 Torino (IT)**

Courier Press, Leamington Spa, England.

## Description

The present invention relates to a windshield wiper apparatus for vehicles, in particular motor vehicles.

In the automobile industry, windshields and/or rear windows are known to be wiped using wiper apparatuses comprising at least a wiper arm mounted for oscillating through a predetermined angle about a fixed pivot axis. At each oscillation, a blade carried by the above wiper arm wipes a surface having the shape of a circular ring sector, which is only part of the window surface to be wiped. Rear windows and/or windshields are, in fact, in general, of substantially rectangular shape, the corners of which cannot, in general, be wiped even when using wiper apparatuses with more than one blade.

In order to overcome, at least in part, the drawback described above, wiper apparatuses are known, for example from U.S. Patent No. 4,418,440, comprising a guide arm mounted for rotation about a transverse pivot axis; a wiper arm slidably mounted on the guide arm; a wiper blade mounted on the wiper arm; and a driving unit, which is connected to the wiper arm for moving one end thereof over a noncentric path about the above pivot axis, so that the guide and wiper arms are oscillated as a unit about the pivot axis, and the wiper arm is simultanously reciprocated along the guide arm to and fro extended positions, in each of which the blade wipes, at least in part, one corner of the window to be wiped.

The known wiper apparatuses of the type described above suffer from the drawback that the driving unit referred to above generally comprises extremely complex transmission gearing resulting in extremely high manufacturing costs, and relatively low reliability.

It is an object of the present invention to provide a windshield wiper apparatus which avoids the above drawback.

According to the present invention there is provided a windshield wiper apparatus comprising:

a guide arm mounted for rotation about a transverse pivot axis;

a wiper arm slidably mounted on the guide arm;

a wiper blade mounted on the wiper arm, and adapted to clean a vehicle windshield;

cam means arranged in a fixed relationship to said pivot axis, and adapted to be fixed to a vehicle body for guiding one end of the wiper arm over a path formed with a pretermined noncentric relation to the pivot axis, whereby the guide arm and the wiper arm are oscillated, in use, as a unit about said pivot axis, and the wiper arm is simultaneously reciprocated along the guide arm to provide a corresponding pretermined area of cleaning of the windshield by said wiper blade; and

drive means for oscillating said unit about said pivot axis, the drive means having an elongated output member, one end of which is connected to one of said guide and wiper arms, as known e.g. from US—A—4,418,440 characterized in that the elongated output member is provided with a worm screw at its other end, and the drive means includes an electric motor with a hollow output shaft, and a nut screw secured thereto;

said worm screw extending through the nut screw to form a screw-nut screw coupling therewith so that rotation of said hollow output shaft and of said nut-screw causes to and fro motion of the worm screw and the associated output member.

According to a preferred embodiment of the invention set forth above, a portion of said output member consists in a rack;

a pinion coaxial with said pivot axis being connected to said guide arm for rotation therewith, and meshing with said rack.

According to a further preferred embodiment, the apparatus set forth above comprises an elongated flexible member coupled with said worm screw for axial movement therewith;

said cam means comprising a tubular element extending along said path and engaged in an axially sliding manner by said flexible member;

the tubular element being provided with an axial slot, and said wiper arm having a transverse pin engaging said slot in a transversely sliding manner.

The invention will now be described by way of example with reference to the accompanying drawings, in which:

FIGURE 1 is a front view of a first embodiment of the wiper apparatus according to the present invention;

FIGURE 2 is a rear view of the apparatus of Figure 1;

FIGURE 3 shows a combined section and block diagram of a detail in Figure 1;

FIGURE 4 is a front view of a second embodiment of the wiper apparatus according to the present invention;

FIGURE 5 shows a combined section and block diagram of a detail in Figure 4;

FIGURE 6 is a sectional view of a first variation of the embodiment of Figure 4; and

FIGURE 7 is a sectional view of a second variation of the embodiment of Figure 4.

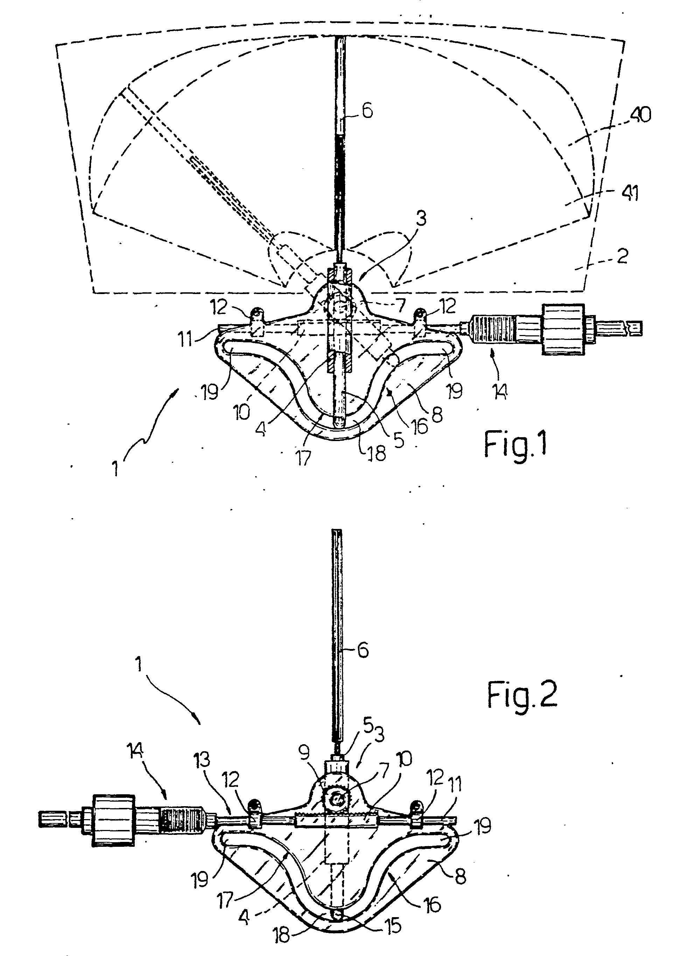

Numeral 1 in Figs 1 and 2 indicates a wiper apparatus for a windshield 2 on a motor vehicle.

Apparatus 1 comprises a swing unit 3 consisting of a tubular guide arm 4 and a wiper arm 5 extending in sliding manner through tubular guide arm 4 and supporting a blade 6.

As shown more clearly in Fig. 2, a radial pivot 7 is connected integral with tubular guide arm 4, which pivot 7 extends through a substantially flat plate 8 connected integral (in a manner not shown) with the body (not shown) of the motor vehicle.

Pivot 7 is fitted with a pinion 9 meshing with a rack 10 constituting an intermediate portion of a rod 11 mounted in sliding manner through two annular guide brackets 12 on plate 8 and constituting the end portion of an elongated output member 13 of a linear actuator 14 supported on the body of the motor vehicle.

On the opposite end to that supporting blade 6, wiper arm 5 is fitted with a radial pin 15 parallel with pivot 7 and connected to a cam 16 defined by a slot 17 formed through plate 8 and comprising a substantially U-shaped intermediate portion 18 and two substantially straight, aligned end portions 19.

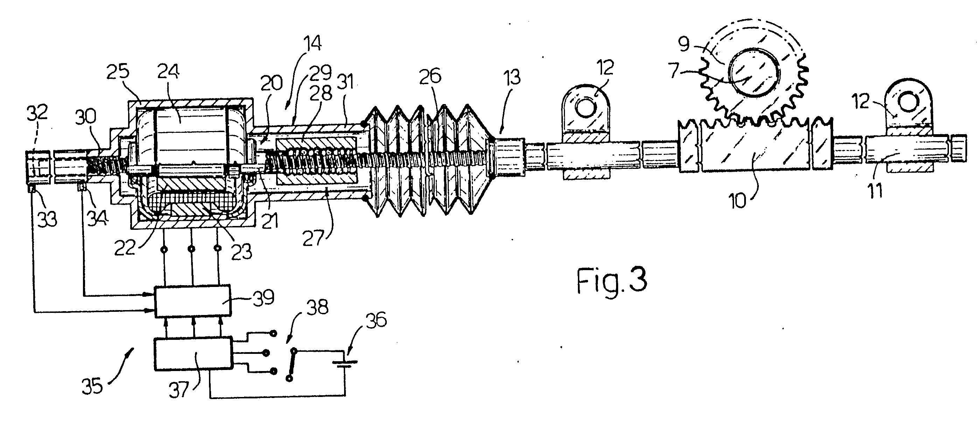

As shown in Fig. 3, linear actuator 14 comprises an electric motor 20 having a hollow central output shaft 21 and comprising a rotor 22 coaxial and integral with shaft 21, and a stator 23 integral with a casing 24 fitted inside a substantially cylindrical casing 25 coaxial with shaft 21.

Output member 13 of actuator 14 is arranged coaxial with shaft 21 and comprises a rigid worm screw 26 coaxial with shaft 21, integral with rod 11, and extending through shaft 21 itself. Screw 26 is connected to shaft 21 by means of a recirculating-ball screw-nut screw coupling 27 comprising, in addition to screw 26, a nut screw 28 connected to screw 26 via the interposition of balls and connected to the end of shaft 21 outside motor 20.

Actuator 14 presents an outer protective casing 29 having an intermediate portion consisting of casing 25, and two end portions consisting of two tubular elements 30 and 31 coaxial with shaft 21 and fitted through with screw 26. The end of screw 26 travelling along tubular element 30 presents a radial appendix 32 designed to engage two limit microswitches 33 and 34 mounted on tubular element 30.

Microswitches 33 and 34 form part of a control circuit 35 also comprising a voltage generator 36, the two poles of which are connected to a control block 37, the first pole directly and the second pole via a four-position switch 38. Control block 37 is a known type available on the market and via which motor 20 may be operated, depending on the position of switch 38, at a first or second speed, or in intermittent mode at the said first or second speed. A known type of inversion block 39, also available on the market, is located between block 37 and motor 20 and controlled by microswitches 33 and 34 so as to invert rotation of motor 20 upon screw 26 reaching either of its two limit positions.

In actual use, operation of motor 20 results in reciprocating travel of screw 26 between the said two limit positions defined by microswitches 33 and 34, and swinging of unit 3 about pivot 7, together with simultaneous transverse sliding of pin 15 along slot 17 of cam 16, and reciprocating axial sliding of wiper arm 5 along guide arm 4.

Subsequent to axial travel of wiper arm 5 as guide arm 4 swings round, blade 6 sweeps over a sector 40 much larger and squarer at the top than the circular sector 41 which would be covered if arms 4 and 5 were integral with each other.

The advantages of wiper apparatus 1 according to the present invention will be clear from the foregoing description. In addition to presenting an extremely straightforward, compact structure, mainly due to the simple design of cam 16 and the employment of motor 20 having a hollow shaft coaxial with and fitted through with screw 26, it is also extremely cheap to produce, by virtue of recirculating-ball coupling 27 acting as an epicyclic reduction gear, thus enabling the employment of relatively cheap, low-power, high-speed electric motors.

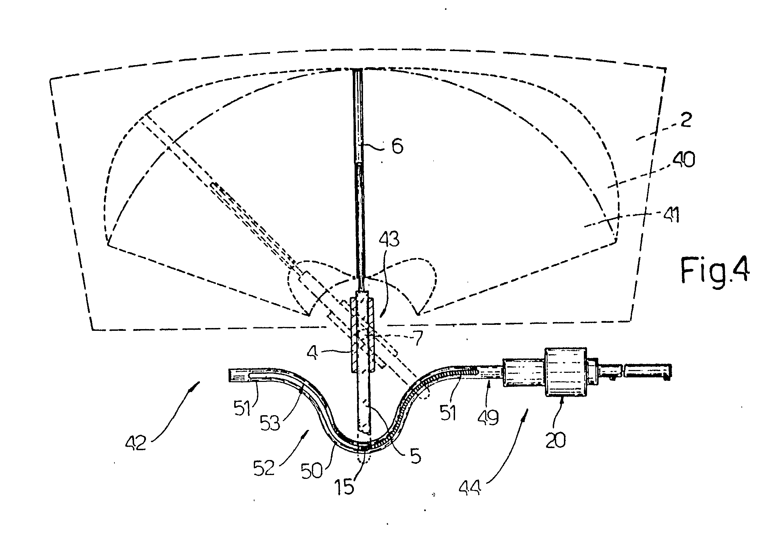

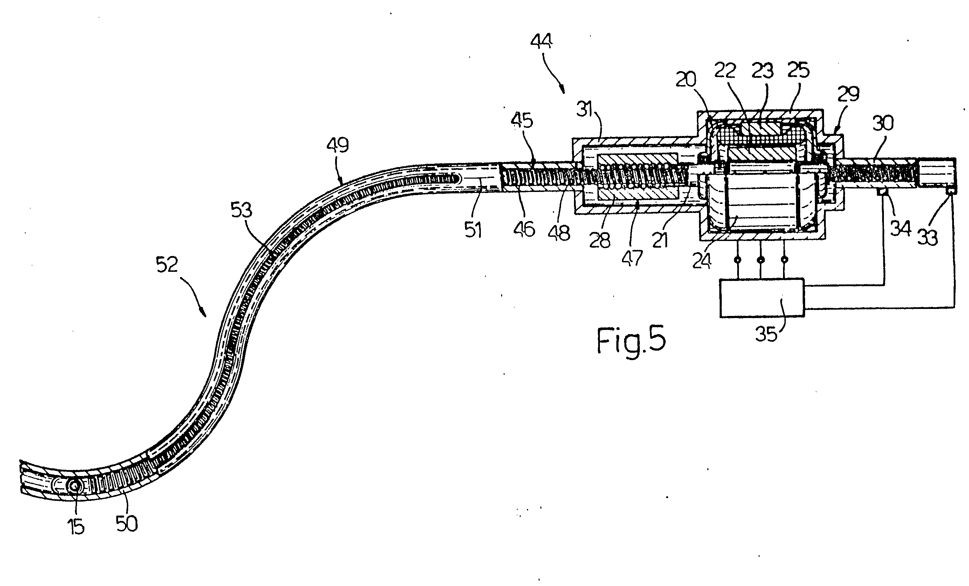

The embodiment shown in Figs. 4 and 5 relates to a wiper apparatus 42 comprising a swing unit 43 substantially identical to swing unit 3 and the component parts of which are, therefore, indicated using the same numbering system.

Swing unit 43 swings about respective pivot 7 by virtue of a linear actuator 44 substantially identical to linear actuator 14 and controlled by a control circuit identical to circuit 35 and, therefore, indicated by the same reference number. Linear actuator 44 differs, however, from linear actuator 14 by comprising an output member 45 consisting entirely of a flexible screw 46 consisting of a precompressed spring extending through hollow shaft 21 of motor 20 and coupled to nut screw 28 via a recirculating-ball screw-nut screw coupling 47.

On wiper apparatus 42, a free end wall of tubular element 31 presents an axial through hole 48 inside which is engaged the free end of a rigid tubular guide 49 comprising a substantially U-shaped intermediate portion 50 and two substantially straight end portions 51.

Tubular guide 49 defines a cam 52, substantially identical in shape to cam 16, for controlling axial slide of arm 5 along guide arm 4. For this purpose, guide 49 presents an axial slot 53 engaged in transversely sliding manner by pin 15, one end of which is connected to the free end of flexible screw 46.

Operation of wiper apparatus 42 is substantially identical to that of wiper apparatus 1 and, therefore, requires no further explanation.

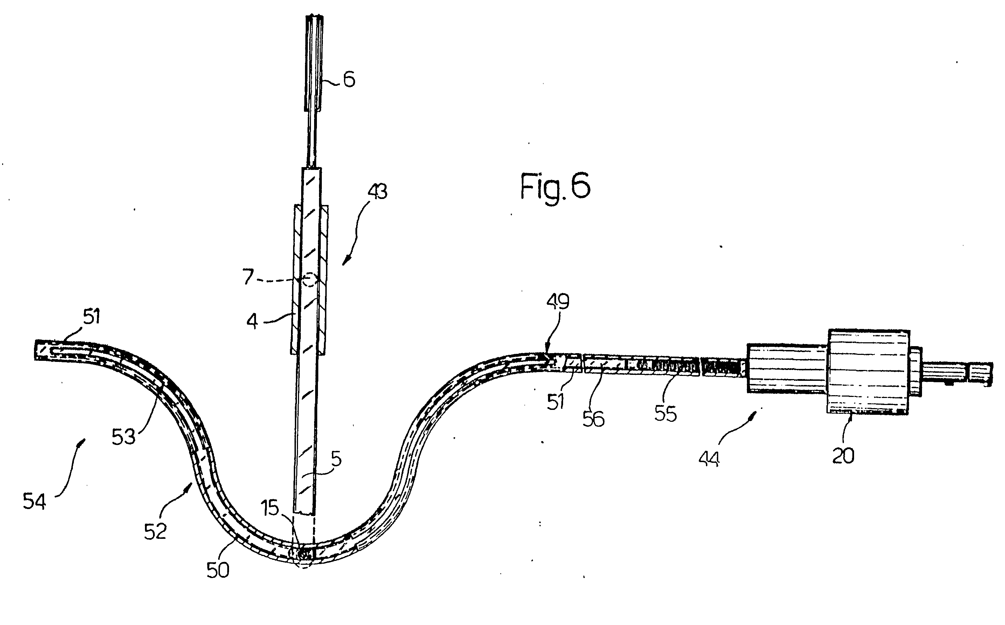

The Fig. 6 variation relates to a wiper apparatus 54 substantially identical to wiper apparatus 42, except that, in place of flexible screw 46 on wiper apparatus 42, it comprises a worm screw 55 which may be either rigid or flexible. To the end of the screw 55, there is connected a flexible rod 56 preferably formed from synthetic material and mounted in sliding manner inside tubular guide 49.

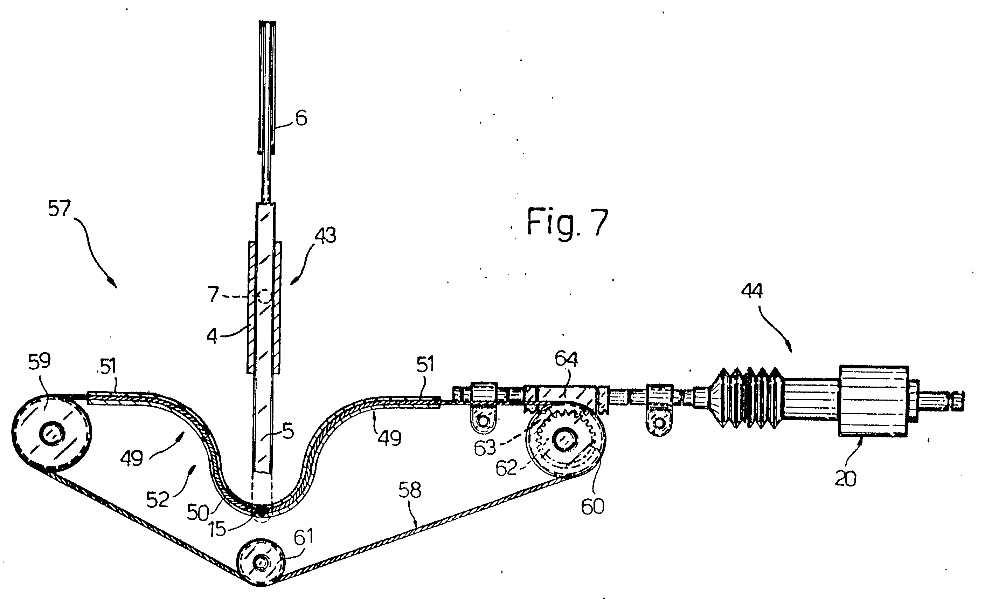

The Fig. 6 solution is preferable to that of Figs. 3 and 4, should an extremely silent-operating wiper be required. Again for the purpose of minimising noise, the Fig. 7 variation relates to a wiper apparatus 57 on which flexible rod 56 of wiper apparatus 54 is replaced by a flexible cable 58 fitted through tubular guide 49 and looped about three pulleys 59, 60 and 61, the first two of which are located on the opposite ends of tubular guide 49 and the third of which is located beneath intermediate portion 50.

Pulley 60 is located adjacent to the end of tubular guide 49 facing motor 20, and is fitted integral with a sprocket 62 connected, via a sprocket-and-rack coupling 63, to a rack 64 connected to one end of a screw (not shown) similar to screw 55 and, in this case, preferably rigid.

## Claims

1. A windshield wiper apparatus comprising:

a guide arm (4) mounted for rotation about a transverse pivot axis (7);

a wiper arm (5) slidably mounted on the guide arm (4);

a wiper blade (6) mounted on the wiper arm (5), and adapted to clean a vehicle windshield;

cam means (16)(52) arranged in a fixed relationship to said pivot axis (7), and adapted to be fixed to a vehicle body for guiding one end of the wiper arm (5) over a path formed with a predetermined noncentric relation to the pivot axis (7), whereby the guide arm (4) and the wiper arm (5) are oscillated, in use, as a unit (3)(43) about said pivot axis (7), and the wiper arm (5) is simultaneously reciprocated along the guide arm (4) to provide a corresponding predetermined area of cleaning of the windshield by said wiper blade (6);

and drive means (14)(44) for oscillating said unit (3)(43) about said pivot axis (7), the drive means (14)(44) having an elongated output member (13,45), one end of which is connected to one of said guide and wiper arms (4,5);

characterized in that the elongated output member (13)(45) is provided with a worm screw (26)(46)(55) at its other end, and the drive means (14)(44) includes an electric motor (20) with a hollow output shaft (21), and a nut screw (28) secured thereto;

said worm screw (26)(46)(55) extending through the nut screw (28) to form a screw-nut screw coupling (27) therewith so that rotation of said hollow output shaft (21) and of said nut-screw (28) causes to and fro motion of the worm screw (26)(46)(55) and the associated output member (13)(45).

2. An apparatus as claimed in Claim 1, characterized in that a portion of said output member (13) consists in a rack (10);

a pinion (9) coaxial with said pivot axis (7) being connected to said guide arm (4) for rotation therewith, and meshing with said rack (10).

3. An apparatus as claimed in Claim 2, characterized in that said cam means (16) comprise a plate (8), and a slot (17) provided through the plate (8);

said wiper arm (5) having a transverse pin (15) engaging in a transversely sliding manner the slot (17), which extends over said path.

4. An apparatus as claimed in Claim 1, characterized in that it comprises an elongated flexible member (46)(56)(58) coupled with said worm screw (46)(55)(26) for axial movement therewith;

said cam means (52) comprising a tubular element (49) extending along said path and engaged in an axially sliding manner by said flexible member (46)(56)(58);

the tubular element (49) being provided with an axial slot (53), and said wiper arm (5) having a transverse pin (15) engaging said slot (53) in a transversely sliding manner.

5. An apparatus as claimed in Claim 4, characterized in that said worm screw (46) is flexible;

said flexible member (46) consisting in an end portion of said flexible worm screw (46).

6. An apparatus as claimed in Claim 4, characterized in that said flexible member comprises a flexible rod (56) connected to one end of said worm screw (55) and extending in a sliding manner inside the tubular element (49).

7. An apparatus as claimed in Claim 4, characterized in that said flexible member comprises a cable (58), a portion of which engages said tubular element (49) in a sliding manner;

the cable (58) being looped about pulleys (59,60,61) located outside the tubular element (49), and transmission means (63) being provided between one (60) of said pulleys and said worm screw (26) for converting reciprocating axial movement of the worm screw (26) into reciprocating rotary movement of said one pulley (60).

8. An apparatus as claimed in claim 7, characterized in that said transmission means (63) comprises a rack (64) connected to said worm screw (26) for axial movement therewith, and a sprocket (62) connected to said one pulley (60) and coupled with said rack (64).

## Patentansprüche

1. Einrichtung zum Scheibenwischen, welche umfaßt:

einen Führungsarm (4) zur Rotation um eine querliegende Schwenkachse (7);

einen Wischerarm (5), welcher gleitend am Führungsarm (4) angeordnet ist;

ein Wischerblatt (6), welches am Wischerarm (5) angeordnet ist und für die Reinigung einer Windschutzscheibe eines Fahrzeuges ausgebildet ist;

Nockenmittel (16,52), welche in fester Beziehung zur Schwenkachse (7) angeordnet sind und für eine Befestigung an einem Fahrzougteil ausgebildet sind, um ein Ende des Wischerarmes (5) über einen Weg zu führen, welcher in einer vorbestimmten nicht-konzentrischen Beziehung zur Schwenkachse (7) liegt, wobei der Führungsarm (4) und der Wischerarm (5) im Betrieb als eine Einheit (3,43) um die Schwenkachse (7) verschwenkt worden und der Wischerarm (5) gleichzeitig längs des Führungsarmes (4) hin- und herbewegt wird, um einen entsprechenden vorbestimmten Bereich der Reinigung der Windschutzscheibe durch das Wischerblatt (6) zu ergeben;

und Antriebsmittel (14,44) zum Hin- und Herbewegen der Einheit (3,43) um die Schwenkachse (7), wobei die Antriebsmittel (14,44) ein längliches Abtriebselement (13,45) aufweisen, dessen eines Ende entweder mit dem Führungs- oder dem Wischerarm (4,5) verbunden ist, dadurch gekennzeichnet, daß das längliche Abtrieselement (13,45) an seinem anderen Ende mit einer Gewindespindel (26,46,55) ausgebildet ist, daß die Antriebsmittel (14,44) einen Elektromotor (20) mit einer hohlen Abtriebswelle (21) und einer daran befestigten Schraube mit Mutter (28) umfassen, und daß sich die Gewindespindel (26,46,55) durch die Schraube mit Mutter (28) erstreckt, um eine Spindel-Schraube mit Mutter-Kupplung (27) damit auszubilden, so daß eine Rotation der hohlen Abtriebswelle (21) und der Schraube mit Mutter (28) eine Hin- und Herbewegung der Gewindespindel (26,46,55) und des zugehörigen Abtriebselementes (13,45) bewirkt.

2. Einrichtung nach Anspruch 1, dadurch gekennzeichnet, daß ein Teil des Abtriebelementes (13) aus einer Zahnstange (10) besteht und daß ein mit der Schwenkachse (7) koaxiales Ritzel (9) mit dem Führungsarm (4) für eine Rotation verbunden ist und mit der Zahnstange (10) kämmt.

3. Einrichtung nach Anspruch 2, dadurch gekennzeichnet, daß die Nockenmittel (16) eine Platte (8) aufweisen, daß in der Platte (8) ein Schlitz (17) vorgesehen ist und daß der Wischerarm (5) einen Querzapfen (15) aufweist, welcher in Querrichtung verschiebbar mit dem Schlitz (17), welcher sich über den Weg erstreckt, zusammenwirkt.

4. Einrichtung nach Anspruch 1, dadurch gekennzeichnet, daß sie ein längliches flexibles Element (46,56,58) aufweist, welches mit der Gewindespindel (46,55,26) für eine axiale Bewegung gekoppelt ist, daß die Nockenmittel (52) ein rohrförmiges Element (49) umfassen, welches sich längs des Weges erstreckt und axial gleitbar mit dem flexiblen Element (46,56,58) zusammenwirkt, daß das rohrförmige Element (49) mit einem axialen Schlitz (53) ausgebildet ist, und daß der Wischerarm (5) einen Querzapfen (15) aufweist, welcher mit dem Schlitz (53) in Querrichtung verschiebbar zusammenwirkt.

5. Einrichtung nach Anspruch 4, dadurch gekennzeichnet, daß die Gewindespindel (46) flexibel ist und daß das flexible Element (46) als ein Endbereich der flexiblen Gewindespindel (46) ausgebildet ist.

6. Einrichtung nach Anspruch 4, dadurch gekennzeichnet, daß das flexible Element eine flexible Stange (56) aufweist, welche mit einem Ende der Gewindespindel (55) verbunden ist und sich gleitend in das Innere des rohrförmigen Elementes (49) erstreckt.

7. Einrichtung nach Anspruch 4, dadurch gekennzeichnet, daß das flexible Element ein Kabel (58) umfaßt, wobei ein Bereich desselben mit dem rohrförmigen Element (49) gleitend zusammenwirkt, daß das Kabel (58) um außerhalb des rohrförmigen Elementes (49) angeordnete Riemenscheiben (59,60,61) geführt ist, und daß Übertragungsmittel (63) zwischen einer (60) der Riemenscheiben und der Gewindespindel (26) vorgesehen sind, um die hin- und hergehende axiale Bewegung der Gewindespindel (26) in eine hin- und hergehende Drehbewegung dieser einen Riemenscheibe (60) umzusetzen.

8. Einrichtung nach Anspruch 7, dadurch gekennzeichnet, daß die Übertragungsmittel (63) eine mit der Gewindespindel (26) für eine axiale Bewegung verbundene Zahnstange (64) und ein mit der einen Riemenscheibe (60) verbundenes und mit der Zahnstange (64) gekuppeltes Kettenrad (62) aufweisen.

**Revendications**

1. Dispositif d'essuie-glace comprenant:
um bras de guidage (4) de manière à pouvoir tourner autour d'un axe formant pivot transversal (7);
un bras d'essuieglace (5) monté de manière à pouvoir glisser sur le bras de guidage (4);
une raclette d'essuie-glace (6) montée sur le bras d'essuie-glace (5) et apte à nettoyer le parebrise d'un véhicule;
des moyens en forme de came (16)(52) disposés dans une relation fixe par rapport audit axe formant pivot (7) et aptes à être fixés à une carrosserie de véhicule de manière à guider une extrémité du bras d'essuie-glace (5) sur une trajectoire possédant une configuration prédéterminée non centrée par rapport à l'axe formant pivot (7), le bras de guidage (4) et le bras d'essuie-glace (5) oscillant en cours d'utilisation sous la forme d'une unité (3)(43) autour dudit axe formant pivot (7), et le bras d'essuie-glace (5) se déplaçant simultanément en va-et-vient le long du bras de guidage (4) de manière à créer une zone prédéterminée correspondante de nettoyage du parebrise par ladite raclette d'essuie-glace (6);
et des moyens d'entraînement (14)(44) servant à faire osciller ladite unité (3)(43) autour dudit axe formant pivot (7), les moyens d'entraînement (14)(44) possédant un élément de sortie allongé (13,45), dont une extrémité est raccordée audit bras de guidage (4) ou audit bras d'essuie-glace (5);
caractérisé en ce que l'élément de sortie allongé (13)(45) comporte, sur son autre extrémité, une vis sans fin (26)(46)(55), et les moyens d'entraînement (14)(41) incluent un moteur électrique (20) possédant un arbre de sortie creux (21), et un écrou (28) fixé à cet arbre;
ladite vis sans fin (26)(46)(55) traversant l'écrou (28) de manière à former, avec ce dernier, un accouplement à vis et écrou (27), de sorte qu'une rotation dudit arbre de sortie creux (22) et dudit écrou (28) provoque un déplacement en va-et-vient de la vis sans fin (26)(26)(50) et de l'élément de sortie associé (13),(45).

2. Dispositif selon la revendication 1, caractérisé en ce qu'une partie dudit élément (13) est constituée par une crémaillère (10);
un pignon (9) coaxial audit axe formant pivot (7) étant raccordé audit bras de guidage (4) de manière à tourner avec ce dernier, et engrenant avec ladite crémaillère (10).

3. Dispositif selon la revendication 2, caractérisé en ce que lesdits moyens formant came (16) comprennent une plaque (8) et une fente (17) traversant la plaque (8);
ledit bras d'essuie-glace (5) possédant un téton transversal (15) s'engageant de manière à glisser transversalement dans la fente (17), qui s'étend sur ladite trajectoire.

4. Dispositif selon la revendication 1, caractérisé en ce qu'il comporte un élément flexible allongé (46)(56)(58) accouplé à ladite vis sans fin (46)(55)(26) de manière à se déplacer axialement avec cette dernière;

lesdits moyens formant came (52) comportant un élément tubulaire (49) s'étendant le long de ladite trajectoire et placé en contact, d'une manière permettant un glissement axial, avec ledit élément flexible (46)(56)(58);

l'élément tubulaire (49) comportant une fente axiale (50), et ledit bras d'essuie-glace (5) comportant un téton transversal (15) s'engageant dans ladite fente (50) de manière à pouvoir y glisser transversalement.

5. Dispositif selon la revendication 4, caractérisé en ce que ladite vis sans fin (46) est flexible;

ledit élément flexible (46) étant constutué par une partie d'extrémité de ladite vis sans fin flexible (46).

6. Dispositif selon la revendication 4, caractérisé en ce que ledit élément flexible comprend une tige flexible (56) raccordée à une extgrémité de ladite vis sans fin (55) et s'étendant, de manière à pouvoir y glisser, dans l'élément tubulaire (49).

7. Dispositif selon la revendication 4, caractérisé en ce que ledit élément flexible est constitué par un câble (58), dont une partie s'applique contre ledit élément tubulaire (49) avec possibilité de glissement;

le câble (58) étant enroulé autour de poulies (59,60,61) situées à l'extérieur de l'élément tubulaire (49), et des moyens de transmission (63) étant prévus entre l'une (60) desdites poulies et ladite vis sans fin (26) de manière à convertir le déplacement axial alternatif de la vis sans fin (26) en un mouvement rotatif alternatif de ladite poulie (60).

8. Dispositif selon la revendication 7, caractérisé en ce que lesdits moyens de transmission (63) comprennent une crémaillère (64) raccordée à ladite vis sans fin (26) de manière à se déplacer axialement avec cette dernière, et un pignon (62) raccordé à ladite poulie (60) et accouplé à ladite crémaillère (64).

Fig.1

Fig.2

Fig.3

Fig.4

Fig.5

EP 0 236 757 B1

Fig. 6

EP 0 236 757 B1

Fig. 7

EP 0 236 757 B1